# NEW EUROPEAN PATENT SPECIFICATION

(11) **EP 0 484 991 B2**
(45) Date of publication and mention of the opposition decision: **01.04.1998**
(45) Mention of the grant of the patent: 15.03.1995
(21) Application number: 91202356.1
(22) Date of filing: 13.09.1991
(51) Int. Cl.: A23B 7/10, A23B 7/155, A23L 3/3571

(54) **Method for preserving foodstuffs**
Verfahren zur Konservierung von Nahrungsmitteln
Procédé de conservation d'aliments

(30) Priority: 13.09.1990 NL 9002016
(43) Date of publication of application: 13.05.1992
(73) Proprietor: JOHMA NEDERLAND B.V., NL-7581 CZ Losser (NL)
(72) Inventor: BONESTROO, Martin Hendrik, NL-6721 BN Bennekom (NL); PEELEN, Petrus Hendrikus Maria, NL-7552 GN Hengelo (NL); KUSTERS, Brigitta Johanna Maria, NL-6828 XR Arnhem (NL); ROMBOUTS, Franciscus Maria, NL-6666 LD Heteren (NL); DE WIT, Jacoba Cornelia, NL-6702 BX Wageningen (NL)
(74) Representative: de Bruijn, Leendert C.

(56) References cited:
- EP-A- 0 312 899
- EP-A- 0 333 056
- EP-A- 0 344 786
- DE-B- 1 160 282
- FR-A- 1 374 435
- LU-A- 60 300
- US-A- 3 255 019
- US-A- 3 410 755
- US-A- 3 891 771
- US-A- 3 899 594
- US-A- 4 168 328
- DERWENT FILE SUPPLIER JAPS, Patent Office of Japan, Tokyo, JP;& JP-A-63 014 680(FUJITSUKO K.K.)
- DERWENT FILE SUPPLIER JAPS, Patent Office of Japan, Tokyo, JP;& JP-A-59 102 350(SATOU TAKASHI)
- Journal of food protection 47, 1984, p. 61-64
- Journal of applied bacteriology, supplement, 1987, p. S51-S58
- The British food manufacturing industries research association : Scientific and technical surveys 144, (December 1983), p. 1-18
- Organic chemistry, 3rd edition, 1970, Hendrickson et al, p. 132
- Extract from psychrotrophic microorganisms in spoilage and pathogenicity (1980, Ed. Roberts et al, published by Academic Press)
- Daeschel et Fleming, 1984, Food Microbiology 1, p. 303-313
- Extract from Lactic acid bacteria inbeverages and food (Fourth long Ashton Symposium, 1973)
- H.P. Fleming et al, Food technology 1981, "Use of microbial cultures : vegetable products, p. 84-88
- Bergey's Manual of determinative bacteriology, 8th Edition, 1974, Buchanan R.E. et al co-editors, part 16, cover sheet, p. 577, 588 and 3rd sheet "Key to the species of genus lactobacillus"
- American type culture collection, catalogue of bacteria and phages, 18th edition, 1992, cover sheet, p. 172 and 415

## Description

The invention relates to a method for preserving foodstuffs as defined by the claims.

A number of methods are generally known for preserving foodstuffs; mention may be made of the addition of salt and vinegar and preservatives such as benzoic acid (E210) and sorbic acid (E200), pasteurisation and sterilisation and also drying.

Another method is the fermentation of foodstuffs. Examples of this are dairy products such as cheese and yoghourt, sauerkraut and various types of sausage, such as salami.

A good preserving method is needed for the preparation of salads. Preserving methods in which heating is to be used, such as, for example, pasteurisation or sterilisation, are unsuitable because of the nature of the products. In particular the sauce or dressing used, but also the vegetables present, would lose too much texture and taste if such methods were used.

The patent US-A-3 891 771 discloses a method of manufacturing fermented vegetable products.

The use of fermented products in salads is, of course, also possible. For example, it is possible to add fermented sausage or to process sauerkraut and yoghourt.

It has now been found that salads comprising sauce or dressings, having an improved shelf life and frequently an improved consistency can be prepared by inoculating the foodstuffs with an amount of lactic acid-forming bacteria followed by a fermentation step. The rapid growth of the lactic acid bacteria, as a result of which adverse organisms are denied their opportunity for growth, is particularly surprising.

When preparing salads, the lactic acid-forming bacteria can be added to the sauce or dressing with which the vegetable and/or meat constituents are mixed. A separate addition is also possible.

The lactic acid-forming bacteria are expediently allowed to proceed until the pH has fallen below 5, preferably below 4.5. The action appropriately takes place at a temperature of 40 to 45°C, at which the bacteria are able to reproduce well and are able to exert their action. A particularly suitable temperature for action is 41 to 43°C. Under certain circumstances, it can also be worthwhile to carry out the fermentation at a lower temperature and consequently over a longer period. One reason for a process of this type can be, for example, the working hours; the fermentation can be carried out when the plant is shut down.

Suitable bacterial cultures are, in particular:
- LUW 850Lactobacillus plantarumCBS 360.90
- LUW 857Lactobacillus plantarumCBS 358.90
- LUW P10Lactobacillus plantarumCBS 359.90
- LUW sb006Lactobacillus acidophilus 1CBS 364.90
- LUW sb024Lactobacillus delbrueckii CBS 363.90

These can be used either separately or together. Other suitable strains can also be added.

The addition of lactic acid-forming bacteria appears to prevent salads becoming rancid as a result of oxidation of the fats, or to lessen the degree to which they do so. It was already known per se that lactic acid bacteria have a reducing action (Bergey's manual of systematic bacteriology, based on: Bergey's manual of determinative bacteriology. Vol. 2: Peter H.A. Sneath (Ed.); N.S. Mair, E. Sharpe (Assoc. Eds), Williams & Wilkins, Baltimore (1986); Kandler, O. (1983), Carbohydrate metabolism in lactic acid bacteria, Antonie van Leeuwenhoek 49: 209-224; Condon, S. (1987), Responses of lactic acid bacteria to oxygen FEMS Microbiology Reviews 46: 269-280) but from these publications it was not to be expected that products are prevented from becoming rancid by the use of such bacteria.

The adverse effect of light, in particular with regard to fat oxidation, is counteracted by the addition of lactic acid-forming bacteria.

In the main lactic acid is formed during the fermentation. A number of lactic acid-forming species of bacteria are also capable of producing acetic acid, which benefits both the flavour and the microbiological stability of the end product. The production of acetic acid can be stimulated by adding a small amount (up to 2 % by weight) of pentoses (in place of sucrose). The same effect can be achieved by adding a small amount, that is to say at most 1 % by weight, of sodium acetate.

Suitable bacteria and/or parts of bacteria are found in the genera Lactobacillus, Pediococcus and Streptococcus (Lactococcus).

The method of preparation according to the invention differs from the known methods in that the constituents are added together to form a salad and are fermented in the packaging, which corresponds to the "growing yoghourt" process. This method is to be preferred to a process in which the starting materials used are separately fermented ingredients which are subsequently combined to form a salad and packaged. This is because the method according to the invention gives rise to a considerably reduced risk with regard to microbial contamination. The creation of a specific low-oxygen medium, which is highly advantageous with regard to the prevention of fat oxidation, is also important.

Although it is preferable, for the reasons given above, to use non-fermented constituents as starting materials, it is, of course, also possible to add constituents which have already been fermented.

The method according to the invention differs from known fermentation processes in that the present method relates to the production of an end product which is not subjected to any further treatment (except for chilling) following fermentation.

The method according to the invention makes it possible to dispense with the use of chemical preservatives, while a chemical stabilisation can also be effected.

It has now also been found that, in practice, the occurrence of hexanal in the treated mixture can be taken as a criterion for a product becoming rancid. The absence of hexanal or the virtual absence of hexanal indicates that the foodstuff has not become rancid.

Moreover, the rate of acidification which occurs as a result of the method according to the present application prevents pathogenic bacteria obtaining a chance to grow. It is now surprising that the rate at which the lactic acid bacteria grow makes these bacteria dominant over the pathogenic bacteria.

Polymer-degrading enzymes lead to wilting of vegetables, which can be present in foodstuffs such as salads, which is considered undesirable by the consumer. When selecting the bacterial strains to be used, attention is preferably paid to the absence of polymer-degrading enzymes. As a result of the rate of acidification which occurs as a result of the method according to the invention, organisms which cause rotting (with polymer-degrading enzymes) are prevented from having their opportunity to grow. When selecting bacterial strains attention is preferably also paid to the absence of amino acid decarboxylases, by which means the formation of so-called biogenic amines can be prevented. Biogenic amines can give rise to hypersensitivity phenomena, headache and the like. This can arise, for example, in the case of mature cheese, fish and the like.

The activity of lactic acid-forming bacteria is partly dependent on the availability of substrates (sugars). The choice of the lactic acid-forming bacteria can be matched to the presence of the sugar used, such as sucrose and hydrolysed starch.

In view of the complex composition of salads and the buffering characteristics of, inter alia, vegetables and meat, activity tests using a standardised model salad were chosen in the first instance for the determination of the acid-forming power of bacterial strains.

A semi-automatic method developed by L.C. Lievense, K. van 't Riet and A. Noomen (1990), (Measuring and modelling the glucose fermenting activity of Lactobacillus plantarum. Appl. Microbiol. Biotechnol. 32 pp. 669-673) at the Agricultural University of Wageningen is used to determine the intrinsic acid-forming power of non-growing lactic acid bacterium cells in concentrated suspensions. This rapid test is based on measurement of the fall in pH in a phosphate buffer during bioconversion of sugar to lactic acid. The detected maximum rate of fall in pH is - within certain limits - linear with the biomass and can be defined as the activity of the cell suspension (pH/min/mg solids content).

The maximum fall in pH is usually detected in the vicinity of pH 5.3, while dpH/dt is linear for a solids content of 0.5 to 4 g per litre. (This corresponds to 1 × 10¹⁰ to 9 × 10¹⁰ cells per ml).

When carrying out the fat oxidation tests, dynamic headspace analysis with the aid of gas chromatography in combination with mass spectrometry was used for the characterisation of specific fat oxidation components.

It was found that the fermented salads did not become rancid or became rancid to only a slight extent, in comparison with non-fermented, acidified salads.

The starter cultures used were found to be capable of consuming oxygen during fermentation at 42°C and storage at 7°C. This finding is of great importance in connection with the choice of packaging material for the foodstuffs, in particular salads.

The addition of sodium acetate modifies the somewhat lactic acid taste. Undissociated acetic acid is formed from sodium acetate as a result of the fall in pH, so that the salad acquires a more characteristic "traditional" smell and taste. In addition, the undissociated acetic acid has a better inhibitory action on microorganisms (particularly yeasts) than lactic acid. A disadvantage of the addition of sodium acetate is, however, that the buffer capacity is increased. Preferably, at most 1 % by weight of lactic acid is added.

If desired, components which are already or partially pre-fermented can be used when preparing the foodstuffs according to the invention, which are fermented. After mixing with other constituents, fermentation can then be continued, if desired, with or without further inoculation with lactic acid-forming bacteria and/or parts of bacteria.

### Examples I-XI

An emulsified sauce was prepared consisting of:
water51.45 % by weight
egg yolk 3.00 % by weight
vegetable oil35.00 % by weight
stabiliser 2.80 % by weight
sugar 6.00 % by weight
salt 1.25 % by weight
mustard 0.50 % by weight

The oil used was soya oil. The stabiliser was Palsgaard 5217 and the sugar used was sucrose unless indicated otherwise.

The emulsifier used in this case is egg yolk; other emulsifiers suitable for foodstuffs can, of course, also be used.

The vegetables used were white cabbage (wc) in the raw state and leek (L) in the blanched state, that is to say treated at 100°C for 1 minute.

The meat used is corned beef.

The sauce was inoculated with various (single strain) starter cultures using 2 % by weight of inoculant based on the salad, that is to say 10⁶ to 10⁷ cells per gram. The sauce was then mixed with the other constituents in the indicated proportions and fermented for 7 hours at a temperature of 42°C. The salad was then chilled (using ice water) and stored at 7°C. The blank salads were acidified with 0.4 % by weight lactic acid.

The coding used in the examples is
WC60 =60 g white cabbage + 40 g sauce
L50 =50 g leek + 50 g sauce
L40C10 =40 g leek + 10 g corned beef + 50 g sauce

The following results were obtained by this means:

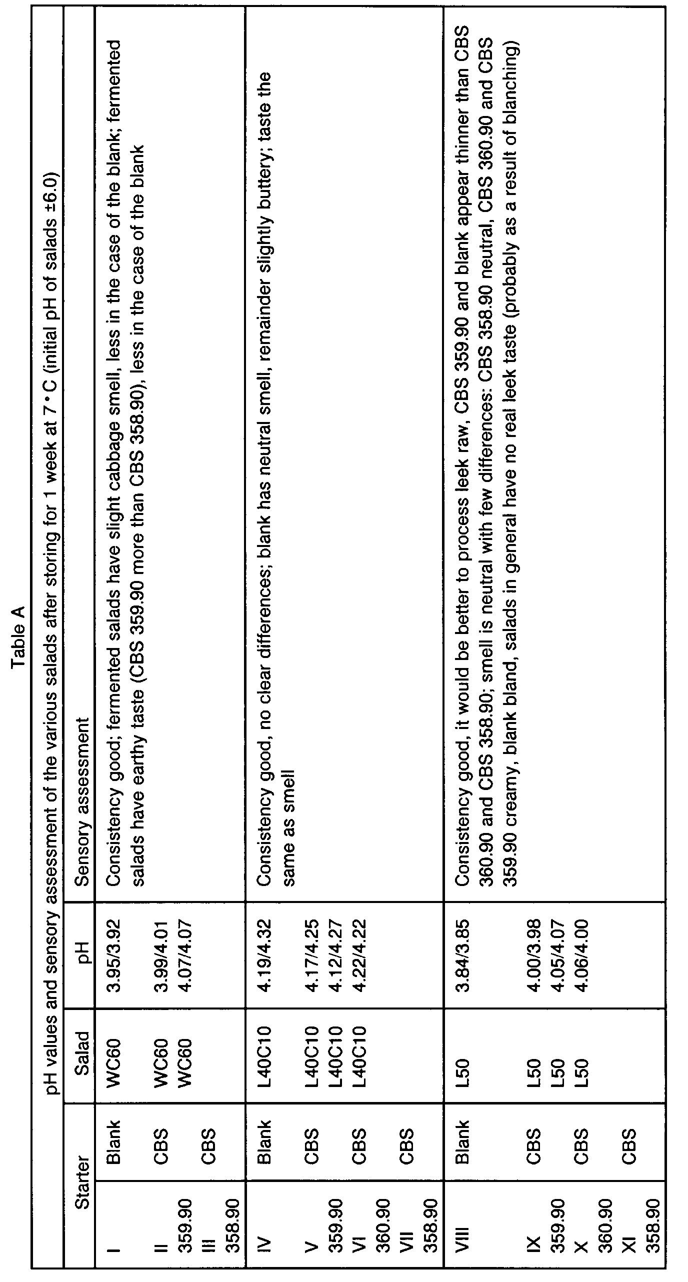

### Examples XII-XXIV

An emulsified sauce as in the preceding examples was used.

The vegetables used were:
carrot (Ca) (blanched for 1 min at 100°C)
blanched celery (B) (RAW)
white cabbage (RAW)

The sauce was inoculated with various (single strain) starter cultures, mixed with the other ingredients in the indicated proportions and then fermented for 7 hours at a temperature of 42°C.

The salads were then chilled (with ice water) and stored at 7°C. The blank salads were acidified with 0.4 % by weight lactic acid.

The starter cultures used were inoculated in an amount of 2 % by weight based on the salad (that is to say 10⁶ to 10⁷ cells per gram).

| | | |
|---|---|---|
| Coding: | Ca50 | = 50 g carrot + 50 g sauce |
| | B50 | = 50 g blanched celery + 50 g sauce |
| | Ca30WC30 | = 30 g carrot + 30 g white cabbage + 40 g sauce |

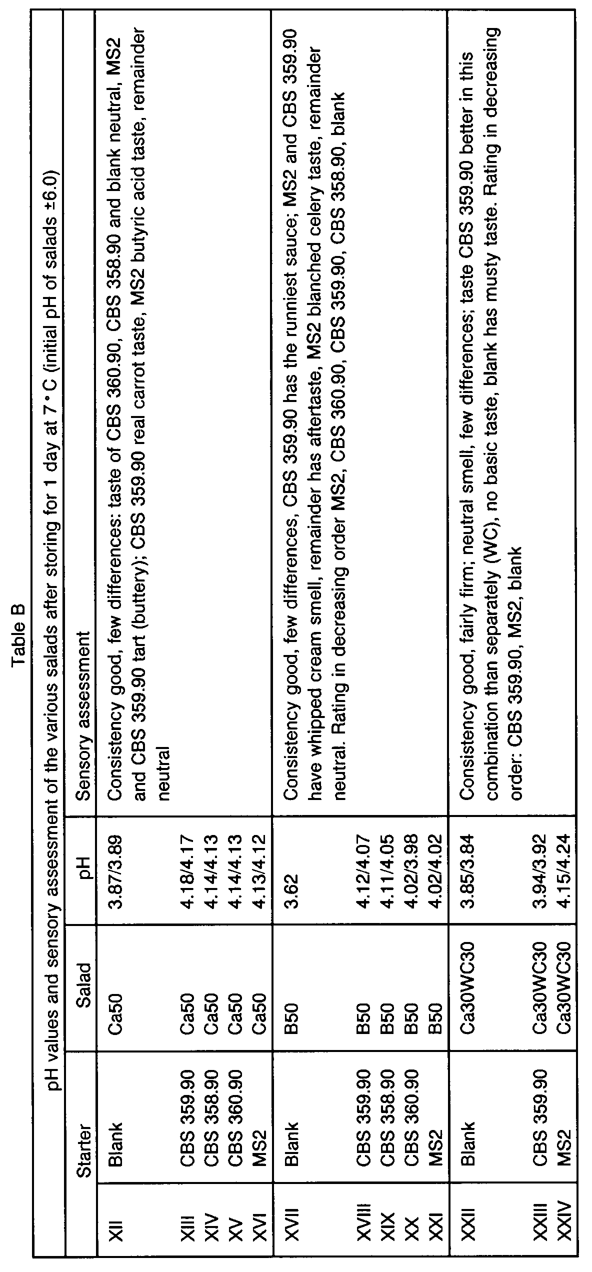

A higher salt concentration may be used (1-1.2 % by weight is normal in salads).

Salads having a neutral taste can simply be seasoned with mustard (powdered) and/or pepper.

### Examples XXV to XXIX

A salad was prepared using an emulsified sauce prepared from:

| | |
|---|---|
| water | 53.2 % by weight |
| egg yolk | 3.0 % by weight |
| vegetable oil | 35.0 % by weight |
| stabiliser | 2.8 % by weight |
| sugar | 5.0 % by weight |
| salt | 1.0 % by weight |

The vegetable oil used was soya oil and the stabiliser used was Palsgaard 5217. The sugar used was sucrose except where indicated otherwise.

The salad was prepared using grated and blanched (1 min at 100°C) carrots.

The sauce was inoculated with 1 % by weight (that is to say 10⁶ - 10⁷ cells/g of salad) of various (single strain) starter cultures and mixed in a ratio of 1 : 1 (weight/weight) with the grated carrots and fermented for 7 hours at 42°C. The salad was then chilled (with the aid of ice-water) and stored at 7°C.

The results obtained are given in Table C.

**Table C**

| pH values after fermentation and smell and taste characteristics of the carrot salads | | | | |
|---|---|---|---|---|
| Starter | | Production date | pH | Sensory assessment |
| XXV | sb-061 | 10-05-89 | 4.32 | Reasonably smooth surface. The sauce has a creamy colour. Neutral smell. Sauce/vegetable ratio could be shifted towards more sauce. The sauce gels and breaks up. No proper recognisable carrot taste. |
| XXVII | sb-035 | 01-05-89 | 4.21 | Many burst air bubbles, surface not smooth. Creamy coloured sauce. Neutral smell. Sauce not smooth. No proper recognisable carrot taste. |
| XXVII | CBS 358.90 | 10-5-89 | 4.23 | Many burst air bubbles, surface not smooth. Creamy coloured sauce. Neutral smell and taste. Sauce proportion is better, no gelling. Taste is better than the first two, but the carrot taste could be better. |
| XXVIII | S7 | 10-05-89 | 4.68 | Many burst air bubbles, surface not smooth. Creamy coloured sauce. Slight butter smell and a somewhat floury taste, no carrot taste. |
| XXIX | CBS 359.90 | 10-5-89 | 4.28 | Many burst air bubbles, surface not smooth. Creamy coloured sauce. Neutral smell. The sauce has gelled. Creamy taste. Seasoned with a little pepper and sugar, pleasant taste, but the carrot taste is still inadequate. |

If the salad is seasoned, the carrot taste comes back to some extent, but the taste is still inadequate.

The carrot bits are still reasonably crunchy. All sauces are somewhat gelled.

CBS 359.90 and CBS 358.90 have the best taste.

### Example XXVI

An emulsified sauce was prepared consisting of:

| | |
|---|---|
| water | 53.20 % by weight |
| egg yolk | 3.00 % by weight |
| vegetable oil | 35.00 % by weight |
| stabiliser | 2.80 % by weight |
| sugar | 5.00 % by weight |
| salt | 1.00 % by weight |

The oil used was soya oil. The stabiliser was Palsgaard 5217 and the sugar used was sucrose.

Carrots were used in the grated state and blanched, that is to say treated for 1 minute at 100°C.

The sauce was inoculated with 2 % by weight (that is 10⁶-10⁷ cells/g of salad) of various (single strain) starter culturs, mixed with the other ingredients in a ratio of 1:1 (w/w) and then fermented for 7 hours at a temperature of 42°C and subsequently chilled (ice-water) and stored at 7°C.

The following results were obtained by this means:

**Table D**

| pH values of the carrot salads prepared with various starters, before fermentation, after fermentation for 7 hours and after storing for 28 days at 7°C | | | |
|---|---|---|---|
| Starter | pH value | | |
| | Initial | After 7 hours | After 28 days |
| Blank | 6.20 | 5.77 | 4.30 |
| MS2 | 5.84 | 3.95 | 3.89 |
| CBS 359.90 | 5.73 | 3.92 | 3.87 |
| SG1 | 5.65 | 4.04 | 3.91 |
| MS7 + S7 (1:1) | 5.74 | 3.89 | 3.89 |

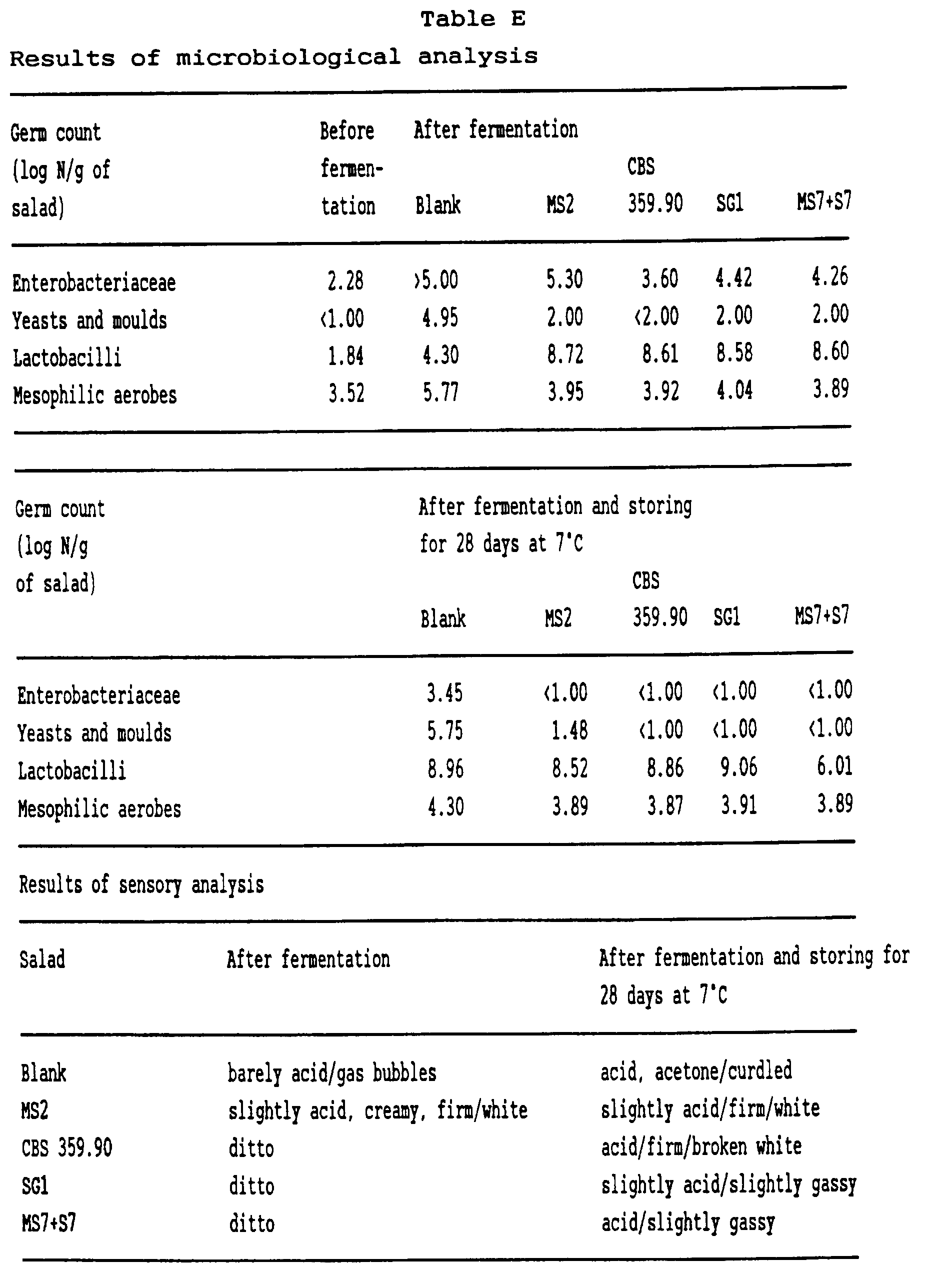

### Example XXVII

An emulsified sauce was prepared consisting of:

| | |
|---|---|
| water | 51.7 % by weight |
| egg yolk | 3.0 % by weight |
| vegetable oil | 35.0 % by weight |
| stabiliser | 2.8 % by weight |
| sugar | 5.0 % by weight |
| salt | 2.5 % by weight |

The oil used was soya oil. The stabiliser was Palsgaard 5217 and the sugar used was sucrose.

White cabbage was used in the finely chopped raw state.

The sauce was inoculated with 2.5 % by weight (that is 10⁶-10⁷ cells/g of salad) of various (single strain) starter cultures, mixed with the other ingredients in a ratio of 1:1.5 (w/w) and then fermented for 7 hours at a temperature of 42°C and subsequently chilled (ice-water) and stored at 7°C.

The following results were obtained by this means:

**Table F**

| pH values of the white cabbage salads prepared with various starters, before fermentation, after fermentation for 7 hours and after storing for 14 days at 7°C | | | |
|---|---|---|---|
| Starter | pH value | | |
| | Initial | After 7 hours | After 14 days |
| Blank | 6.04 | 5.75 | 4.03 |
| MS2 | 5.07 | 3.81 | 3.64 |
| CBS 359.90 | 5.06 | 3.75 | 3.81 |
| S7 | 5.13 | 3.84 | 3.78 |
| CBS 360.90 | 5.02 | 3.82 | 3.57 |
| 831 | 4.93 | 3.86 | 3.62 |

**Table G**

| Results of microbiological analysis | | | | | | | |
|---|---|---|---|---|---|---|---|
| Germ count (log N/g of salad) | Before fermentation | After fermentation | | | | | |
| | | Blank | MS2 | CBS 359.90 | S7 | CBS 360.90 | 831 |
| Enterobacteriaceae | | 5.66 | <1.10 | <1.10 | <1.10 | <1.10 | <1.10 |
| Yeasts and moulds | | <1.10 | <1.10 | <1.10 | <1.10 | <1.10 | <1.10 |
| Lactobacilli | | 4.74 | 8.86 | 9.12 | 8.91 | 8.71 | 8.83 |
| Mesophilic aerobes | | 5.80 | <3.70 | <3.70 | <3.70 | <3.70 | <3.70 |

| Germ count (log N/g of salad) | | After fermentation and storing for 14 days at 7°C | | | | | |
|---|---|---|---|---|---|---|---|
| | | Blank | MS2 | CBS 359.90 | S7 | CBS 360.90 | 831 |
| Enterobacteriaceae | | 3.32 | <1.10 | <1.10 | <1.10 | <1.10 | <1.10 |
| Yeasts and moulds | | 4.48 | <1.10 | <1.10 | <1.10 | <1.10 | <1.10 |
| Lactobacilli | | >7.70 | 8.69 | 8.99 | 8.27 | 8.42 | 8.56 |
| Mesophilic aerobes | | <4.70 | <1.10 | 2.04 | <1.10 | <1.10 | <1.10 |

**TABLE H**

| Taste and smell characteristics | | |
|---|---|---|
| Strain | After fermentation | After 14 days at 7°C |
| MS2 | fresh acid, cabbage taste predominant, salt | mild smell, acid taste, salt, distinct cabbage smell, acceptable taste |
| CBS 359.90 | fresh slightly acid, cabbage taste predominant | mild acid smell and taste |
| S7 | ditto | mild acid, slight cabbage taste and smell |
| CBS 360.90 | ditto | strong acid taste, cabbage taste somewhat predominant but overall taste is good |
| 831 | dusty, musty smell and taste | mild smell and taste |

### Example XXVIII

An emulsified sauce was prepared consisting of:

| | |
|---|---|
| water | 52.95 % by weight |
| egg yolk | 3.0 % by weight |
| vegetable oil | 35.0 % by weight |
| stabiliser | 2.8 % by weight |
| sugar | 5.0 % by weight |
| salt | 1.25 % by weight |

The oil used was soya oil. The stabiliser was Palsgaard 5217 and the sugar used was sucrose.

Leek was finely chopped and used in the raw state.

The sauce was inoculated with 2.5 % by weight (that is 10⁶-10⁷ cells/g of salad) of various (single strain) starter cultures, mixed with the other ingredients in a ratio of 1:1.5 (w/w) and then fermented for 7 hours at a temperature of 42°C and subsequently chilled (ice-water) and stored at 7°C.

The following results were obtained by this means:

**Table I**

| pH values of the leek salads prepared with various starters, before fermentation, after fermentation for 7 hours and after storing for 20 days at 7°C | | | |
|---|---|---|---|
| Starter | pH value | | |
| | Initial | After 7 hours | After 20 days |
| Blank | 5.86 | 5.15 | 4.44 |
| MS2 | 5.38 | 3.81 | 3.96 |
| CBS 359.90 | 5.49 | 3.80 | 4.00 |
| S7 | 5.41 | 3.93 | 4.05 |
| CBS 360.90 | 5.42 | 3.94 | 4.07 |
| MS7 | 5.71 | 3.93 | 4.00 |

**Table J**

| Results of microbiological analysis | | | | | | | |
|---|---|---|---|---|---|---|---|
| Germ count (log N/g of salad) | Before fermentation | After fermentation | | | | | |
| | | Blank | MS2 | CBS 359.90 | S7 | CBS 360.90 | MS7 |
| Enterobacteriaceae | | 5.71 | 3.17 | <1.10 | 3.13 | <1.10 | 1.85 |
| Yeasts and moulds | | <1.10 | <1.10 | <1.10 | <1.10 | <1.10 | <1.10 |
| Lactobacilli | | >6.16 | 8.75 | 8.56 | 8.39 | 8.48 | 8.46 |
| Mesophilic aerobes | | 6.04 | 3.88 | 3.38 | 4.52 | 4.67 | 3.00 |

| Germ count (log N/g of salad) | | After fermentation and storing for 20 days at 7°C | | | | | |
|---|---|---|---|---|---|---|---|
| | | Blank | MS2 | CBS 359.90 | S7 | CBS 360.90 | MS7 |
| Enterobacteriaceae | | >5.70 | 2.55 | 2.34 | 2.59 | 2.72 | 1.90 |
| Yeasts and moulds | | <2.70 | 2.30 | 1.85 | 1.85 | <1.10 | <1.10 |
| Lactobacilli | | 7.94 | 5.11 | 5.32 | 5.93 | 5.97 | 6.53 |
| Mesophilic aerobes | | 6.21 | 4.87 | 4.26 | 4.45 | 4.75 | 3.93 |

**TABLE K**

| Taste and smell characteristics | | |
|---|---|---|
| Strain | After fermentation | After 21 days at 7°C |
| MS2 | mild acid, acceptable taste, strong leek taste | strong leek taste, mild smell and acid taste |
| CBS 359.90 | stronger acid taste and strong leek taste | no strong leek taste, mild |
| S7 | no distinct acid/leek taste, neutral | neutral taste and smell |
| CBS 360.90 | ditto | virtually no smell, mild acid taste |
| MS7 | very strong acid taste, leek less predominant taste | strong "dairy" smell and very overall acceptable salad |

### Example XXIX

An emulsified sauce was prepared consisting of:

| | |
|---|---|
| water | 51.7 % by weight |
| egg yolk | 3.0 % by weight |
| vegetable oil | 35.0 % by weight |
| stabiliser | 2.8 % by weight |
| sugar | 5.0 % by weight |
| salt | 2.5 % by weight |

The oil used was soya oil. The stabiliser was Palsgaard 5217 and the sugar used was sucrose.

Potato was cut (1 × 1 × 1 cm blocks) and boiled.

The sauce was inoculated with 2.5 % by weight (that is 10⁶-10⁷ cells/g of salad) of various (single strain) starter cultures, mixed with the other ingredients in a ratio of 1:1.5 (w/w) and then fermented for 7 hours at a temperature of 42°C and subsequently chilled (ice-water) and stored at 7°C. The following results were obtained by this means:

**Table L**

| pH values of the potato salads prepared with various starters, before fermentation, after fermentation for 7 hours and after storing for 21 days at 7°C | | | |
|---|---|---|---|
| Starter | pH value | | |
| | Initial | After 7 hours | After 21 days |
| Blank | 5.93 | 5.34 | 4.13 |
| MS2 | 5.08 | 3.83 | 3.51 |
| CBS 359.90 | 4.98 | 3.72 | 3.50 |
| S7 | 5.07 | 3.76 | 3.48 |
| CBS 360.90 | 5.05 | 3.81 | 3.48 |
| MS7 | 5.52 | 3.84 | 3.61 |

**Table M**

| Results of microbiological analysis | | | | | | | |
|---|---|---|---|---|---|---|---|
| Germ count (log N/g of salad) | Before fermentation | After fermentation | | | | | |
| | | Blank | MS2 | CBS 359.90 | S7 | CBS 360.90 | MS7 |
| Enterobacteriaceae | | 6.42 | 2.00 | <1.10 | 3.04 | 2.68 | 2.86 |
| Yeasts and moulds | | <1.10 | <1.10 | <1.10 | <1.10 | <1.10 | <1.10 |
| Lactobacilli | | 7.00 | 8.84 | 8.94 | 8.88 | 8.84 | 9.06 |
| Mesophilic aerobes | | 6.93 | 2.46 | 2.89 | 3.23 | 2.83 | 3.70 |
| | | | | | | | |

| Germ count (log N/g of salad) | | After fermentation and storing for 21 days at 7°C | | | | | |
|---|---|---|---|---|---|---|---|
| | | Blank | MS2 | CBS 359.90 | S7 | CBS 360.90 | MS7 |
| Enterobacteriaceae | | 5.54 | <1.70 | 2.11 | <1.70 | <1.70 | <1.70 |
| Yeasts and moulds | | <2.47 | 4.11 | <1.70 | >4.48 | >3.70 | <1.10 |
| Lactobacilli | | 8.29 | 8.60 | 9.00 | 8.39 | 8.59 | 9.08 |
| Mesophilic aerobes | | 7.76 | 3.75 | 3.27 | 5.18 | 3.30 | 1.85 |

**TABLE N**

| Taste and smell characteristics | | |
|---|---|---|
| Strain | After fermentation | After 21 days at 7°C |
| MS2 | acid taste, "biogarde" smell acceptable | fresh acid, hardly any potato taste, aftertaste strongly acid |
| CBS 359.90 | mild acid taste, no potato smell or taste | no distinct smell or taste, slight aftertaste (unpleasant) |
| S7 | no smell, strong lactic acid taste | mild acid taste, slight aftertaste |
| CBS 360.90 (?) | strong acid taste, peculiar fresh and slightly acid | good taste as opposed to previous smell |
| MS7 | strong unpleasant taste, but good smell | more dairy taste (fresher) |

### Example XXX

An emulsified sauce was prepared consisting of:

| | |
|---|---|
| water | 51.7 % by weight |
| egg yolk | 3.0 % by weight |
| vegetable oil | 35.0 % by weight |
| stabiliser | 2.8 % by weight |
| sugar | 5.0 % by weight |
| salt | 2.5 % by weight |

The oil used was soya oil. The stabiliser was Palsgaard 5217 and the sugar used was sucrose.

Chicken was cut (1.2 × 1.2 × 1.2 cm) and boiled.

The sauce was inoculated with 3 % by weight (that is 10⁶-10⁷ cells/g of salad) of various (single strain) starter cultures, mixed with the other ingredients in a ratio of 2:1 (w/w) and then fermented for 7 hours at a temperature of 42°C and subsequently chilled (ice-water) and stored at 7°C.

The following results were obtained by this means:

**Table O**

| pH values of the chicken salads prepared with various starters, before fermentation, after fermentation for 7 hours and after storing for 5 weeks at 7°C | | | |
|---|---|---|---|
| Starter | pH value | | |
| | Initial | After 7 hours | After 5 weeks |
| Blank | 6.29 | 5.90 | 4.90 |
| CBS 359.90 | 5.97 | 4.50 | 4.30 |
| CBS 358.90 | 5.98 | 4.41 | 4.30 |
| MS2 | 5.94 | 4.46 | 4.35 |
| CBS 360.90 | 6.03 | 4.55 | 4.16 |
| sb-035 | 5.97 | 4.59 | 4.33 |

**Table P**

| Results of microbiological analysis | | | | | | | |
|---|---|---|---|---|---|---|---|
| Germ count (log N/g of salad) | Before fermentation | After fermentation | | | | | |
| | | Blank | CBS 359.90 | CBS 358.90 | MS2 | CBS 360.90 | SB-035 |
| Enterobacteriaceae | 3.16> | 6.48 | 5.98 | 5.86 | 5.72 | 4.90 | 5.24 |
| Yeasts and moulds | <1.70 | <1.70 | <1.70 | <1.70 | <1.70 | <1.70 | <1.70 |
| Lactobacilli | 3.33 | 9.07 | 9.16 | 8.95 | 8.94 | 9.11 | 9.25 |
| Mesophilic aerobes | 3.16 | 4.48 | 6.09 | 5.96 | 5.86 | 5.27 | 5.39 |
| | | | | | | | |

| Germ count (log N/g of salad) | | After fermentation and storing for 5 weeks at 7°C | | | | | |
|---|---|---|---|---|---|---|---|
| | | Blank | CBS 359.90 | CBS 358.90 | MS2 | CBS 360.90 | SB-035 |
| Enterobacteriaceae | | 7.59 | 4.25 | 4.05 | 4.28 | 3.23 | 3.42 |
| Yeasts and moulds | | <1.70 | <1.70 | <1.70 | <1.70 | <1.70 | <1.70 |
| Lactobacilli | | 8.33 | 8.22 | 7.90 | 8.19 | 8.74 | 8.51 |
| Mesophilic aerobes | | 7.97 | 4.83 | 4.66 | 4.91 | 3.72 | 4.38 |

### Example XXXI

An emulsified sauce was prepared consisting of:

| | |
|---|---|
| water | 51.7 % by weight |
| egg yolk | 3.0 % by weight |
| vegetable oil | 35.0 % by weight |
| stabiliser | 2.8 % by weight |
| sugar | 5.0 % by weight |
| salt | 2.5 % by weight |

The oil used was soya oil. The stabiliser was Palsgaard 5217 and the sugar used was sucrose.

Corned beef was cut and boiled (1.2 × 1.2 × 1.2 cm blocks).

The sauce was inoculated with 3 % by weight (that is 10⁶-10⁷ cells/g of salad) of various (single strain) starter cultures, mixed with the other ingredients in a ratio of 2:1 (w/w) and then fermented for 7 hours at a temperature of 42°C and subsequently chilled (ice-water) and stored at 7°C.

The following results were obtained by this means:

**Table Q**

| pH values of the meat salads prepared with various starters, before fermentation, after fermentation for 7 hours and after storing for 5 weeks at 7°C | | | |
|---|---|---|---|
| Starter | pH value | | |
| | Initial | After 7 hours | After 5 weeks |
| Blank | 6.22 | 6.23 | 4.16 |
| CBS 359.90 | 5.58 | 4.26 | 4.02 |
| CBS 358.90 | 5.47 | 4.28 | 4.10 |
| MS2 | 5.47 | 4.28 | 4.00 |
| CBS 360.90 | 5.67 | 4.30 | 4.13 |
| sb-035 | 5.50 | 4.46 | 4.08 |

**Table R**

| Results of microbiological analysis | | | | | | | |
|---|---|---|---|---|---|---|---|
| Germ count (log N/g of salad) | Before fermentation | After fermentation | | | | | |
| | | Blank | CBS 359.90 | CBS 358.90 | MS2 | CBS 360.90 | SB-035 |
| Enterobacteriaceae | 3.87 | >6.48 | 5.23 | 5.00 | 4.59 | 3.00 | 4.37 |
| Yeasts and moulds | <1.70 | <1.70 | 1.85 | <1.70 | <1.70 | <1.70 | <1.70 |
| Lactobacilli | 3.30 | 7.26 | 8.72 | 8.64 | 8.38 | 8.61 | 8.58 |
| Mesophilic aerobes | 3.26 | >6.48 | 5.30 | 4.83 | 5.00 | 4.79 | 4.68 |
| | | | | | | | |

| Germ count (log N/g of salad) | | After fermentation and storing for 5 weeks at 7°C | | | | | |
|---|---|---|---|---|---|---|---|
| | | Blank | CBS 359.90 | CBS 358.90 | MS2 | CBS 360.90 | SB-035 |
| Enterobacteriaceae | | <5.70 | 2.69 | 2.61 | 2.04 | <1.70 | 2.28 |
| Yeasts and moulds | | 5.21 | 5.73 | 5.39 | 6.48 | 4.96 | 3.84 |
| Lactobacilli | | 8.26 | 7.86 | 8.43 | 8.46 | 8.44 | 8.39 |
| Mesophilic aerobes | | <5.70 | 3.12 | 3.25 | 3.02 | 2.48 | 3.04 |

### Examples XXXII-XXXV

These examples illustrate the suppression of the growth of adverse bacterial strains by the use of lactic acid-forming bacteria.

An emulsified sauce was used which consisted of:

| | |
|---|---|
| water | 52.2 % by weight |
| egg yolk | 3.0 % by weight |
| rape oil | 35.0 % by weight |
| stabiliser (Palsgaard 5217) | 2.8 % by weight |
| sucrose | 6.0 % by weight |
| salt | 1.0 % by weight |

The sauce was inoculated with, in each case, 2 % by weight (that is to say 10⁶-10⁷ cells/g of salad) of the various (single strain) starter cultures and additionally with cultures of, respectively, Staphylococcus aureus, Listeria monocytogenes, Hafnia alveï and Saccharomyces cerevisiae and mixed with the chopped raw white cabbage in a ratio of 1:1 (weight/weight) and then fermented for 7 hours at a temperature of 42°C and subsequently chilled (ice-water) and stored at 7°C.

The starters used were lactic acid-forming bacteria having, respectively, a high (CBS 360.90), a moderate (CBS 358.90) and a low (g-7-III) acid-forming capacity.

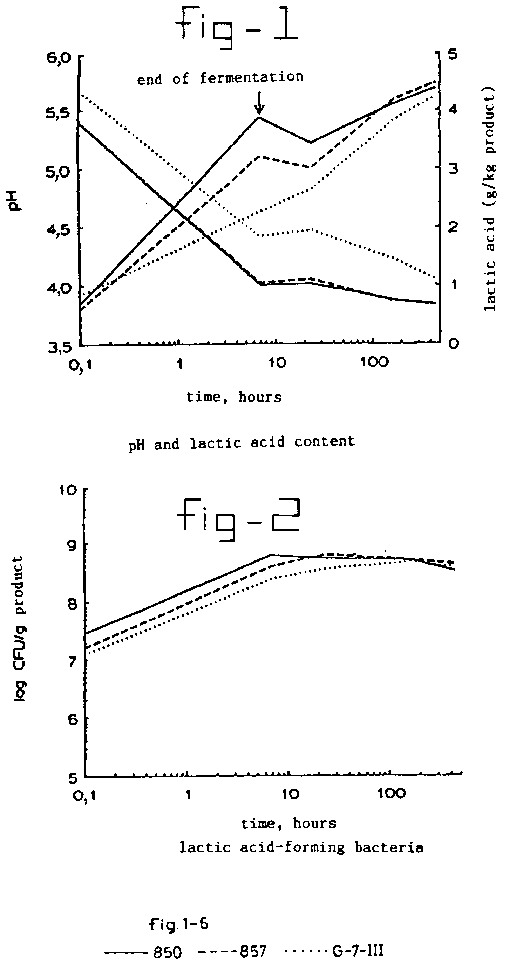

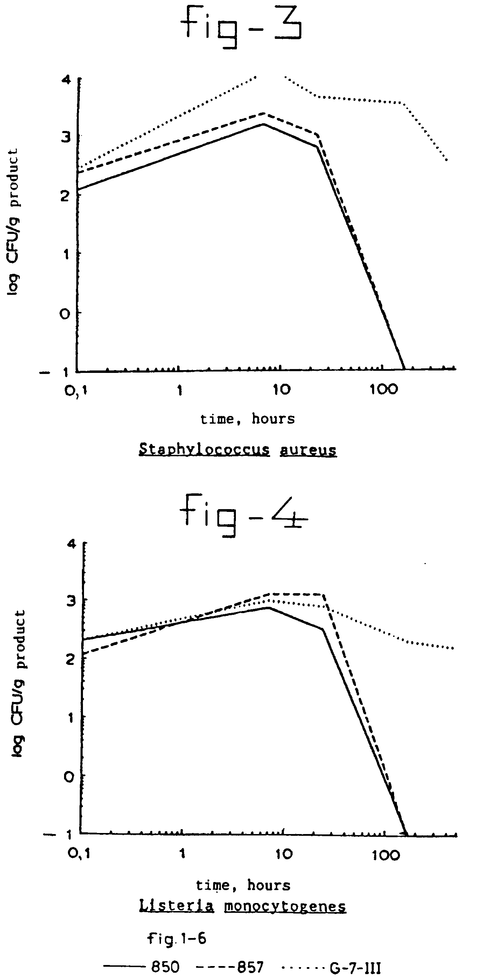

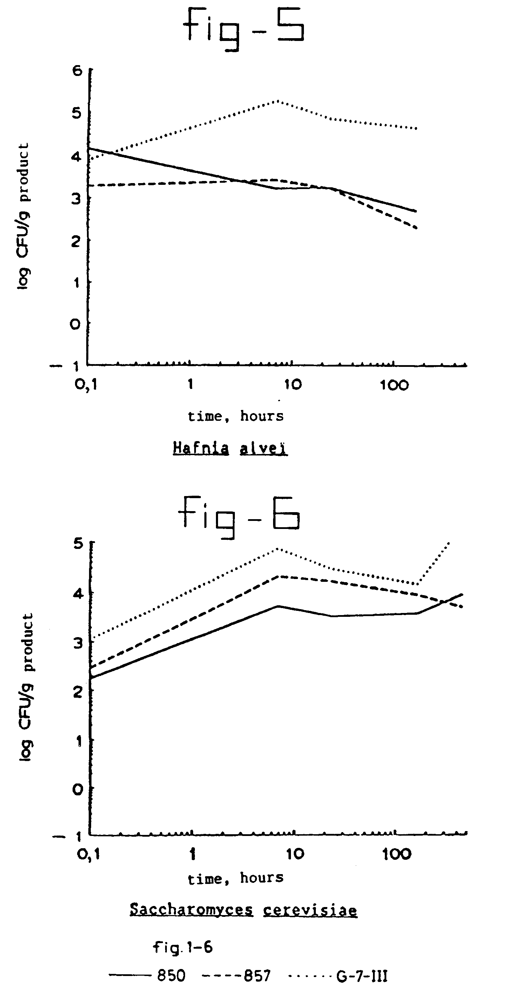

The pH, the lactic acid content and the microbial ecology were monitored during the fermentation and during storage at 7°C. The results obtained are shown in Figures 1 to 6.

The inhibition of pathogenic organisms and organisms causing rotting in the fermented salad as a result of the use of the suitable lactic acid-forming bacteria, in particular as a result of the use of lactic acid-forming bacteria having a high acid-forming capacity, is clearly apparent from these figures.

In these figures, Fig. 1 shows the change in pH and in the lactic acid content, Fig. 2 shows the number of CFU (colony-forming units) of lactic acid-forming bacteria, Fig. 3 shows the number of CFU of Staphylococcus aureus, Fig. 4 shows the number of CFU of Listeria monocytogenes, Fig. 5 shows the number of CFU of Hafnia alveï and Fig. 6 shows the number of CFU of Saccharomyces cerevisiae.

### Examples XXXVI, XXXVII and XXXVIII

These examples illustrate the counteraction of fat oxidation in the salads as a result of the use of the invention.

An emulsified sauce was prepared from

| | |
|---|---|
| water | 51.70 % by weight |
| egg yolk | 3.00 % by weight |
| soya oil | 35.00 % by weight |
| stabiliser (Palsgaard 5217) | 2.80 % by weight |
| sucrose | 6.00 % by weight |
| salt | 1.50 % by weight |

The sauce was inoculated with, in each case, 3 % by weight (that is to say 10⁶-10⁷ cells/g of salad) of the various (single strain) starter cultures, mixed with blocks (1 × 1 × 1 cm) of boiled potato in a ratio of 1:2 (weight/weight) and fermented for 7 hours at a temperature of 42°C and then chilled (ice-water) and stored at 7°C, with or without exposure to light (fluorescent light from Philips FTD33 tubes).

During storage at 7°C, the degree of fat oxidation was determined with the aid of instrument techniques (gas chromatography, dynamic headspace technique). The smell and taste characteristics were also determined.

Conditions for gas chromatography: Purge & Trap Tenax TA (low temperature)
CARLO ERBA GC 6000 VEGA
SUPELCOWAX 10 column 60 m 0.25 mm I.D. film thickness 0.25 µm
Stationary phase CARBOWAX 20 M
Carrier He 0.6 ml/min, 160 kPA
Detector FID 270°C
Programme: 19 min 40°C, 2.5°C/min up to 100°C, 5°C/min up to 250°C.

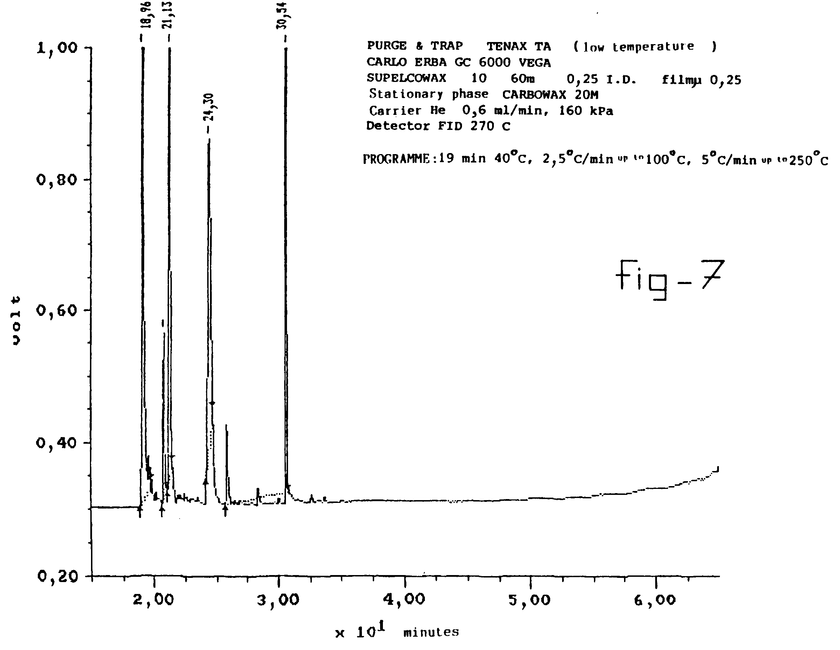

Fig. 7 shows the results for acidified potato salad (sauce:potato = 1:2) which was not inoculated and was exposed to light for 11 days at 7°C.

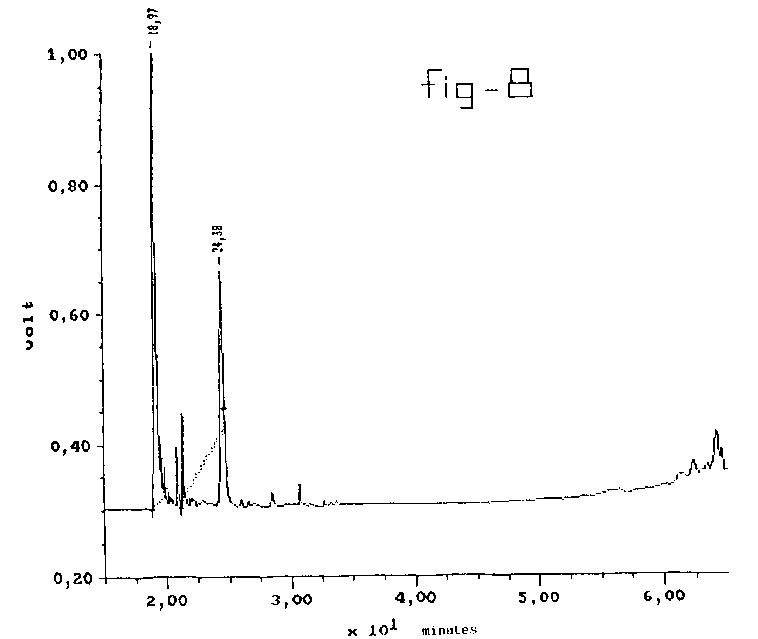

Fig. 8 shows the results of the measurements in respect of potato salad (sauce:potato = 1:2) which was inoculated with strain CBS 359.90 and was exposed to light for 11 days at 7°C.

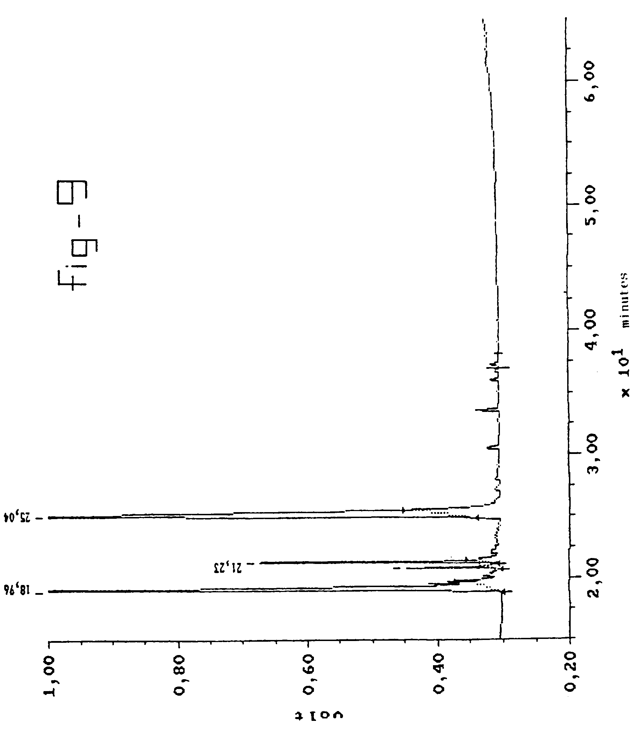

Fig. 9 shows the results of the measurements with respect to a potato salad (sauce:potato = 1:2) which was inoculated with strain ATCC 8014 and was exposed to light for 11 days at 7°C.

It can clearly be seen from the results that the fermented salads do not become rancid or do so only to a slight extent, this being in contrast to unfermented acidified salads.

The separate addition of the starter cultures is also possible.

## Claims

1. A method for preserving salads, said salads comprising a sauce or dressing and vegetable and/or meat constituents, said method comprising
- a fermentation step following inoculation of the salad with lactic acid forming bacteria, said lactic acid forming bacteria being bacteria which grow with a rate of acidification sufficient to prevent adverse organisms, i.e. pathogenic organisms and organisms causing rotting in particular yeasts and moulds obtaining a chance to grow and optionally subsequently
- a chilling step
as final steps for preservation of the salad.

2. A method according to claim 1 for preserving salads thereby preventing or decreasing rancid taste of said salads said salads comprising a sauce or dressing and vegetable and/or meat constituents, said method comprising
- a fermentation step following inoculation of the salad with lactic acid forming bacteria, said lactic acid forming bacteria being bacteria which grow with a rate of acidification sufficient to prevent adverse organisms, i.e. pathogenic organisms and organisms causing rotting in particular yeasts and moulds obtaining a chance to grow and optionally subsequently
- a chilling step
as final steps for preservation of the salad.

3. A method according to claim 1 or 2, wherein the lactic acid bacteria grow with a rate of acidification sufficient to prevent adverse organisms, i.e. pathogenic organisms and organisms causing rotting said organisms being moulds and yeasts obtaining a chance to grow.

4. A method according to any of the preceding claims wherein lactic acid forming bacteria are used wherein polymer degrading enzymes and/or amino acid decarboxylases are absent.

5. A method according to any preceding claims wherein the lactic acid bacteria are selected from one or more of the following *Lactobacillus plantarum* CBS 360.90, CBS 358.90, CBS 359.90, *Lactobacillus acidophilus* 1 CBS 364.90 and *Lactobacilius delbrueckii* CBS 363.90.

6. A method according to any preceding claims wherein the lactic acid forming bacterium is also capable of producing acetic acid.

7. A method according to any preceding claim wherein production of acetic acid is stimulated by adding up to 2% by weight of pentoses to the salad.

8. A method according to any of the preceding claims wherein at most 1% by weight or sodium acetate is added to the salad.

9. A method according to any of the preceding claims wherein the constituents to form the salad are added together to form a salad and are subjected to the fermentation step in the packaging.

10. A method according to any of the preceding claims wherein the constituents have not been previously subjected to fermentation.

11. A method according to any of the preceding claims wherein the lactic acid forming bacteria prevent growth of microorganisms capable of producing biogenic amines and/or amino acid decarboxylases.

12. A method according to any of the preceding claims wherein the fermentation is carried out at a temperature below 45°C, preferably between 40 tot 45°C, most preferably at 41 to 43°C.

13. A method according to any of the preceding claims wherein the fermentation step is allowed to proceed to a pH below 5, preferably below 4,5.

14. A method according to any of the preceding claims wherein the lactic acid forming bacteria are capable of consuming oxygen during fermentation at 42°C and during storage at 7°C.

15. A method according to any of the preceding claims wherein a blanching step is carried out prior to the fermentation step, said blanching step being treatment at 100°C for 1 minute.

16. A method according to any of the preceding claims wherein the fermentation step is 7 hours at a temperature of 42°C.

## Patentansprüche

1. Verfahren zum Konservieren von Salaten, die eine Soße oder Dressing und pflanzliche und/oder Fleisch-Bestandteile aufweisen, mit
- einem nach Impfen des Salates mit Milchsäure bildenden Bakterien folgenden Fermentierungsschritt und optional anschließend
- einem Abkühlungs-Schritt
als abschließende Schritte zum Haltbarmachen des Salates.

2. Verfahren nach Anspruch 1 zum Konservieren und dadurch verhindern oder vermindern eines ranzigen Geschmackes von Salaten, die eine Soße oder Dressing und pflanzliche und/oder Fleisch-Bestandteile aufweisen, mit
- einem nach Impfen des Salates mit Milchsäure bildenden Bakterien folgender Fermentierungs-Schritt, wobei diese Bakterien mit einer ausreichenden, schädliche Organismen verhindernden Acidifizierungsgeschwindigkeit wachsen, nämlich um pathogenen und Faulung hervorrufenden Organismen, insbesondere Hefen und Schimmelpilzen, keine Wachstumsmöglichkeit zu geben und optional anschließend
- einem Abkühlungs-Schritt
als abschließende Schritte zum Haltbarmachen des Salates

3. Ein Verfahren nach Anspruch 1 oder 2, bei dem die Milchsäurebakterien mit einer Acidifizierungsgeschwindigkeit wachsen, die ausreicht um zu verhindern, daß schädliche Organismen, nämlich pathogene Organismen und Faulung verursachenden Organismen, eine Chance zum Wachsen erhalten, wobei die genannten Organismen Schimmelpilze und Hefen sind.

4. Verfahren nach einem der vorhergehenden Ansprüche, wobei Milchsäure bildende Bakterien ohne polymerabbauende Enzyme und/oder Aminosäure-Decarboxylasen verwendet werden.

5. Verfahren nach einem der vorhergehenden Ansprüche, wobei die Milchsäurebakterien aus einer oder mehreren der folgenden ausgewählt werden:
Lactobacillus plantarum CBS 360.90, CBS 358.90, CBS 359.90, Lactobacillus acidophilus 1 CBS 364.90 und Lactobacillus delbrueckii CBS 363.90.

6. Verfahren nach einem der vorhergehenden Ansprüche, wobei das Milchsäure bildende Bakterium auch Essigsäure herstellen kann.

7. Verfahren nach einem der vorhergehenden Ansprüche, wobei die Herstellung von Essigsäure durch Zugabe von bis zu 2 Gew. % an Pentosen zu dem Salat angeregt wird.

8. Verfahren nach einem der vorhergehenden Ansprüche, wobei höchstens 1 Gew. % an Natriumacetat zu dem Salat gegeben wird.

9. Verfahren nach einem der vorhergehenden Ansprüche, wobei zur Herstellung des Salates die salatbildenden Bestandteile zusammengegeben werden und diese in der Verpackung dem Fermentierungs-Schritt unterworfen werden.

10. Verfahren nach einem der vorhergehenden Ansprüche, wobei die Bestandteile vorher noch keiner Fermentierung unterworfen worden sind.

11. Verfahren nach einem oder mehreren der vorhergehenden Ansprüchen, wobei die Milchsäure bildenden Bakterien die das Wachstum von Mikroorganismen verhindern in der Lage sind, biogene Amine und/oder AminosäureDekarboxylasen herzustellen.

12. Verfahren nach einem der vorhergehenden Ansprüche, wobei die Fermentierung bei einer Temperatur zwischen 40° und 45° C, vorzugsweise bei 41° bis 43° C, durchgeführt wird.

13. Verfahren nach einem der vorhergehenden Ansprüche, wobei der Fermentierungs-Schritt bis zu einem pH-Wert unter 5, vorzugsweise unter 4,5, fortgeführt wird.

14. Verfahren nach einem der vorhergehenden Ansprüche, wobei die Milchsäure bildenden Bakterien in der Lage sind, während einer Fermentierung bei 42° C und während einer Lagerung bei 7° C Sauerstoff zu verbrauchen.

15. Verfahren nach einem der vorhergehenden Ansprüche, wobei ein einminütiger, bei 100° C stattfindender Blanchier-Schritt vor dem Fermentierungs-Schritt ausgeführt wird.

16. Verfahren nach einem der vorhergehenden Ansprüche, wobei der Fermentierungs-Schritt bei einer Temperatur von 42° C für 7 Stunden andauert.

## Revendications

1. Procédé pour conserver les salades, lesdites salades comprenant des constituants à base de sauce ou d'assaisonnement, de légumes et/ou de viande, ledit procédé comprenant
- une étape de fermentation suivant l'inoculation de la salade avec des bactéries productrices d'acide lactique, lesdites bactéries productrices d'acide lactique étant des bactéries qui se développent avec un taux d'acidification suffisant pour empêcher des organismes néfastes, c'est-à-dire des organismes pathogènes et des organismes provoquant la pourriture, en particulier des levures et des moisissures, d'avoir une chance de se développer, facultativement suivie par
- une étape de refroidissement
en tant qu'étapes finales pour la conservation de la salade.

2. Procédé selon la revendication 1, pour conserver les salades empêchant ainsi ou réduisant le goût rance desdites salades, lesdites salades comprenant des constituants à base de sauce ou d'assaisonnement, de légumes et/ou de viande, ledit procédé comprenant
- une étape de fermentation suivant l'inoculation de la salade avec des bactéries productrices d'acide lactique, lesdites bactéries productrices d'acide lactique étant des bactéries qui se développent avec un taux d'acidification suffisant pour empêcher des organismes néfastes, c'est-à-dire des organismes pathogènes et des organismes provoquant la pourriture, en particulier des levures et des moisissures, d'avoir une chance de se développer, facultativement suivie par
- une étape de refroidissement
en tant qu'étapes finales pour la conservation de la salade.

3. Procédé selon la revendication 1 ou 2, dans lequel les bactéries productrices d'acide lactique se développent avec un taux d'acidification suffisant pour empêcher des organismes néfastes, c'est-à-dire des organismes pathogènes et des organismes provoquant la pourriture, lesdits organismes étant des moisissures et des levures, d'avoir une chance de se développer.

4. Procédé selon l'une des revendications précédentes, dans lequel on utilise des bactéries productrices d'acide lactique dépourvues d'enzymes dégradant les polymères et/ou d'aminoacides décarboxylases.

5. Procédé selon l'une des revendications précédentes, dans lequel les bactéries productrices d'acide lactique sont choisies parmi un ou plusieurs des éléments du groupe de bactéries comprenant Lactobacillus plantarum CBS 360.90, CBS 358.90, CBS 359.90, Lactobacillus acidophilus 1 CBS 364.90 et Lactobacillus delbrueckii CBS 363.90.

6. Procédé selon l'une des revendications précédentes, dans lequel la bactérie productrice d'acide lactique est aussi capable de produire de l'acide acétique.

7. Procédé selon l'une des revendications précédentes, dans lequel la production d'acide acétique est stimulée par addition jusqu'à 2% en poids de pentoses à la salade.

8. Procédé selon l'une des revendications précédentes, dans lequel on ajoute au maximum 1% en poids d'acétate de sodium à la salade.

9. Procédé selon l'une des revendications précédentes, dans lequel les constituants formant la salade sont ajoutés ensemble pour former une salade et soumis à l'étape de fermentation dans l'emballage.

10. Procédé selon l'une des revendications précédentes, dans lequel les constituants n'ont pas été préalablement soumis à une fermentation.

11. Procédé selon l'une des revendications précédentes, dans lequel les bactéries productrices d'acide lactique empêchent le développement des microorganismes capables de produire des amines biogènes et/ou des aminoacides décarboxylases.

12. Procédé selon l'une des revendications précédentes, dans lequel la fermentation est conduite à une température inférieure à 45°C, comprise de préférence entre 40 et 45°C, et de façon encore préférée entre 41 et 43°C.

13. Procédé selon l'une des revendications précédentes, dans lequel l'étape de fermentation est poursuivie jusqu'à atteindre un pH inférieur à 5, de préférence inférieur à 4,5.

14. Procédé selon l'une des revendications précédentes, dans lequel les bactéries productrices d'acide lactique sont capables de consommer l'oxygène durant la fermentation à 42°C et durant le stockage à 7°C.

15. Procédé selon l'une des revendications précédentes, dans lequel une étape de blanchiment est réalisée avant l'étape de fermentation, ladite étape de blanchiment étant un traitement à 100°C pendant 1 minute.

16. Procédé selon l'une des revendications précédentes, dans lequel l'étape de fermentation est de 7 heures à une température de 42°C.
